# EUROPEAN PATENT SPECIFICATION

(11) **EP 0 872 081 B1**
(45) Date of publication and mention of the grant of the patent: **10.09.2003**
(21) Application number: 96937626.8
(22) Date of filing: 31.10.1996
(51) Int. Cl.: H04L 9/32

(54) **METHOD AND DEVICE FOR DATA COMMUNICATION**
VERFAHREN UND EINRICHTUNG ZUR DATENKOMMUNIKATION
PROCEDE ET DISPOSITIF POUR COMMUNIQUER DES DONNEES

(30) Priority: 31.10.1995 SE 9503841
(43) Date of publication of application: 21.10.1998
(73) Proprietor: TDS TODOS DATA SYSTEM AB, 421 31 Göteborg (SE)
(72) Inventor: JOHANSSON, Anders, S-175 43 Järfälla (SE)
(74) Representative: Henningsson, Gunnar
(86) International application number: SE9601396
(87) International publication number: WO97016904

(56) References cited:
- GB-A- 2 264 377
- US-A- 4 969 188
- US-A- 5 109 152
- US-A- 5 212 369
- US-A- 5 347 580
- US-A- 5 355 413

## Description

### Technical field

The present invention relates to a method and a system for data communication between a central unit or host, such as a central computer in a bank, and a user unit comprising an IC card that the user carries and uses when he intends to carry out transactions involving communications with the host, and a terminal capable of communicating with the IC card and the host and acting as an interconnection link between them.

### Background

It is presently known to use data transfer systems comprising IC card-controlled terminals and a host. It is likewise known to use, in these systems some kind of secret information to cryptographically protect transferred data.

Two principal disadvantages are found in the data transfer systems in use today. The first one relates to the fact that the terminals contain secret information which, on account of the physical availability of these terminals to the public, may be exposed to violation in the sense that an unauthorised person may try to read the secret information from the terminal. The second disadvantage is that since present standards on the configuration of IC cards, with the exception of such basic features as signal levels and the like, allow considerable degrees of freedom regarding for instance the memory addresses to which the data are to be allocated, the terminals normally are able to handle one type of card only.

US Patent number 5,212,369 discloses a method and a system involving transfer of application programs from a smart card to a card reader. In order to overcome problems relating to slowness of data transfer, US 5,212,369 provides a faster download process.

US Patent number 4,969,188 discloses an encryption device comprising two parts, a base part and a security module in the form of a smart card. In US 4,969,188 problems relating to management of encryption keys are addressed in some detail, in particular in view of already standardized encryption schemes.

### Object of the invention

The object of the present invention is to provide a method and a system solving or to a considerable extent eliminating the problems outlined above, thus providing increased flexibility with respect to the cards that may be used in the system and increased safety in the managing of the secret information.

### Summary of the invention

The purpose of the present invention is achieved by a method defined in claim 1 and a system defined in claim 8.

A basic concept of the invention is that at least sensitive data transfers between the user unit and the host are carried out in a separate safe system mode and that program-controlled realisation of the safe system mode is carried out by using card-specific program information contained in the card. The safe system mode means that data transfers are carried out in such a manner that unauthorised persons cannot distort or manipulate transferred data without such interference being discovered. For this purpose, secret information in the user unit and in the host is made use of. The initiation of communication between the card and the terminal is carried out in so-called normal system mode.

Cards used in accordance with the invention contain card-specific program information transferred to and used by the terminal in connection with the establishment of a safe mode.

In accordance with the present invention the "resident" information contents in the terminal is no more extensive than is absolutely necessary. Each card carries program information which is specific to the individual card and which is transferred to the terminal. Since the card-specific program information is transferred to the terminal the latter need not contain "resident" program information that is specific to each individual card or card type.

This makes it possible to use in the system, cards that are configured in different ways without it being necessary for the terminal to contain considerable software, and for example several card issuers may use the same set of terminals without it being necessary that the terminal contains, or that the other card issuers have knowledge of, the software that a specific card issuer uses in order that a safe system mode be adopted.

The system in accordance with the invention allows the terminal to be made both inexpensive and "flexible" in the sense that without difficulties it is possible to adapt the unity card/terminal to include cards that are configured differently without the terminal having to be changed or be provided with new "resident" program information.

Transfer of card-specific program information from the card to the terminal is effected, in accordance with a preferred embodiment, under the controll of the host the actions of which are based on card-identifying information or a code transferred from the user unit. However, it is obviously possible that this may be effected by the terminal and the card without involving the host.

Cards used in accordance with the invention likewise contain card-specific secret information which is used to produce cryptographical protection of data transfers and which is stored in such a way that it cannot be read out from the card.

In accordance with a preferred embodiment the card-specific secret information is used to encrypt (in the widest sense), by means of an algorithm, preferably the so-called DES algorithm, a generated session key, preferably in the form of a random number which is then transferred to the host in encrypted form. This session key is then used to cryptographically protect data transferred between the user unit and the host in a safe system mode.

The above-mentioned session key is erased in the user unit at the latest the next time contact is established between an IC card and the terminal, although it is possible to effect such erasure, for instance in response to a specific command while contact is still being maintained, because it is desired to begin a new session, or when the contact between the card in question and the terminal is interrupted.

Obviously it is likewise possible to use card-specific secret information as such in order to cryptographically protect data transferred between the host and the user unit in a safe system mode, i.e. that the secret information is used as a cryptographic key, either in an encryption algorithm or in an authentication algorithm.

In accordance with a preferred embodiment, the terminal comprises a keyboard which may be used only in a safe system mode.

In order to protect data transferred on an open line or in another medium accessible to unauthorised persons various different cryptographical techniques are used. A common method is to first encrypt data which are then transferred and finally decrypted. The reverse order is also possible, i.e. to first decrypt data, then transfer them and finally encrypt the transferred data which are then retrieved in cleartext. Both these techniques obviously may be used in connection with the invention. In the case of for instance a random number which is adopted to create an encryption key for an encryption algorithm it is possible to instead transfer the random number in cleartext and to then encrypt/decrypt it and later use the result as an encryption key. Also this technique may be used in connection with the invention, which thus is not limited to use in connection with the cryptographic technique described herein in detail. Symmetrical as well as asymmetrical encryption systems may be used.

### Brief Description of the Drawings

- Fig. 1: is a schematic block diagram relating to one embodiment of a system in accordance with the present invention.
- Fig. 2: illustrates a flow chart of measures to be taken in accordance with a preferred embodiment before initiation of data transfers between the user unit and a host in a safe system mode.
- Fig. 3: illustrates the manner in which an encryption key is generated and encrypted in accordance with one embodiment of the present invention before the encryption key is transferred to the host.
- Fig. 4: illustrates the authentication of messages (data) in accordance with a preferred embodiment of the present invention.
- Fig. 5: contains a list of the different varieties of generation of code keys and transfer thereof to the host.
- Figs 6a-6h: are flow charts illustrating the varieties listed in Fig. 5.

### Detailed Description of Embodiments of the Present Invention

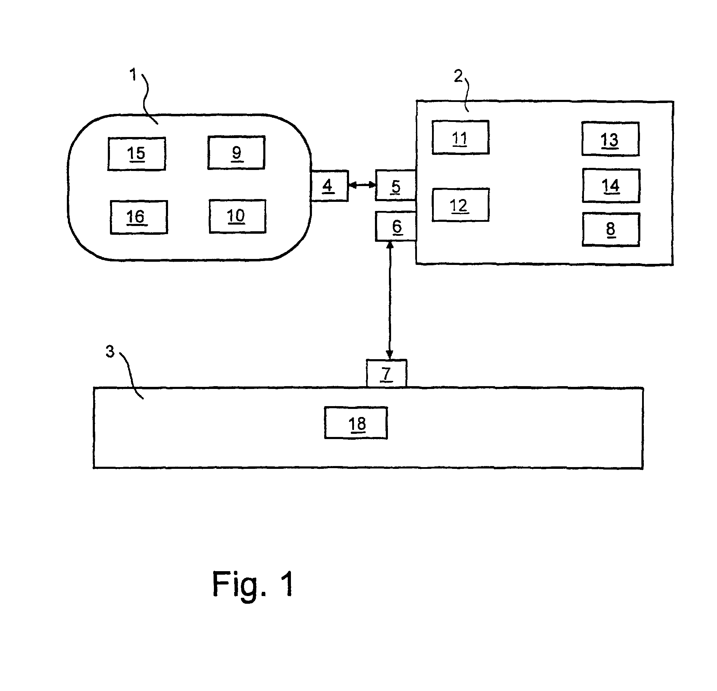

In the following a system will be described with reference to Fig. 1 which system is designed for safe data transfers and which comprises a user unit, comprising an IC card 1, a terminal 2, and a central unit (host) 3.

The IC card 1 comprises card communication means 4 that are placed in contact with terminal communication means 5 to establish a connection for data transfers between the IC card 1 and the terminal 2.

In addition, the IC card 1 comprises first card memory means 9 for storing card-specific program information to be transferred to the terminal 2; second card memory means 10 for storage of card-specific secret information in such a way that it cannot be read out from the card; a memory means 16 for storage of a card-identifying code; and a processor 15 containing required program information to allow execution of the required cryptographic processing, in this case encryption, and generation of a session key before the latter is transferred to the host 3, as will be described further on.

The terminal 2 comprises a terminal communication unit 6 in communication with the central communication unit 7 associated with the host 3, in order to allow data transfers between the host 3 and the user unit, and a key generating means 13, in the form of a random number or pseudo random number generator for generation of a session key to be transferred to the host in an encrypted state and to be used for authentication of messages to be transferred between the user unit and the host 3, as will also be described later on. The terminal 2 comprises storage means 14 to store the session key.

In accordance with another preferred embodiment no key generating means is used in the terminal but the generation of the key instead takes place in the processor 15 in the card.

The terminal 2 and the host 3 in addition comprise control means 8, 18 to control the transfer of the system to the safe system mode which in accordance with the preferred embodiment is considered to have been adopted once the session key has been transferred to the host. In this mode data transfers between the terminal 2 and the host 3 take place in such a manner that data that are being transfered are protected (cryptographic authentication) by means of the session key that has been transferred to the host. In addition, the terminal 2 comprises read-out means 11 for read-out of the card-specific program information in said first card memory means 9, the read-out program information being stored in and used by program executing means 12 in the terminal 2 in order to control interaction between the terminal 2 and the IC card 1.

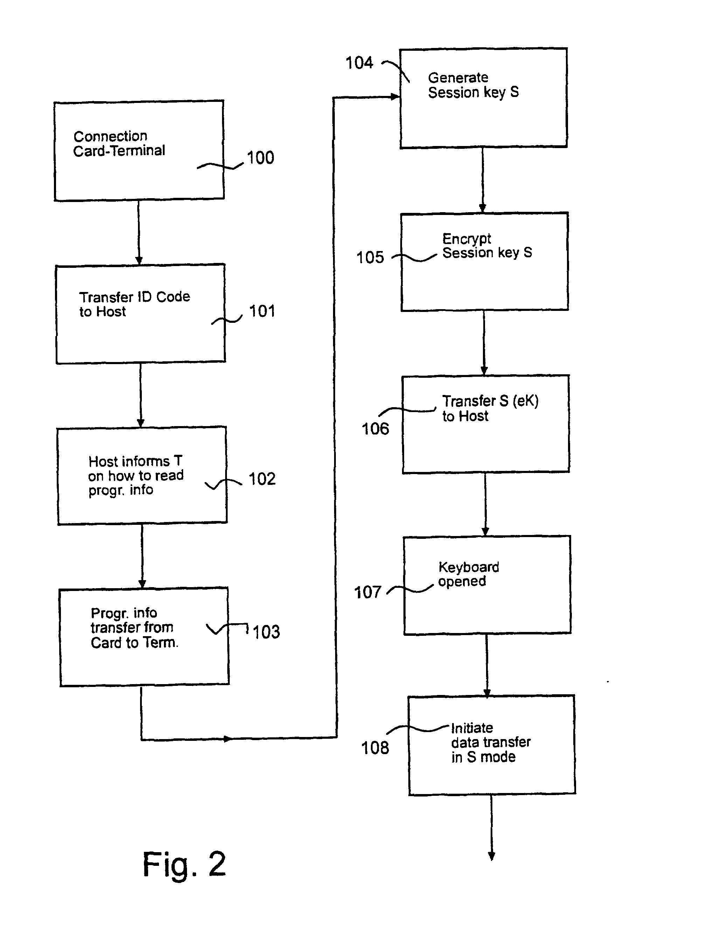

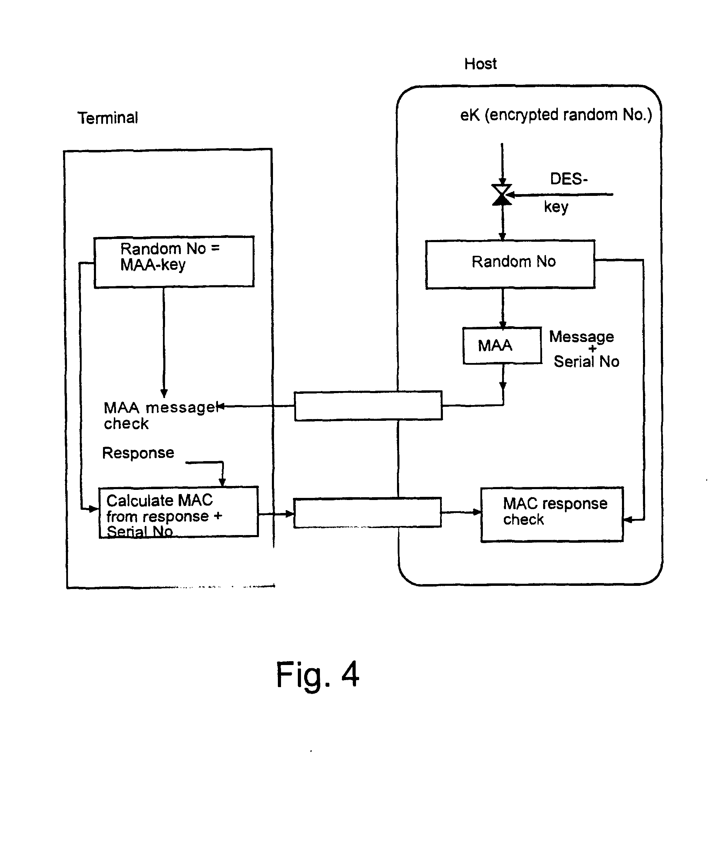

Fig. 2 illustrates in the form of a flow chart the manner in which the IC card, the terminal and the host cooperate in accordance with one embodiment before data transfer in a safe system mode is initiated, a process to be described in closer detail in the following with reference to Fig. 4.

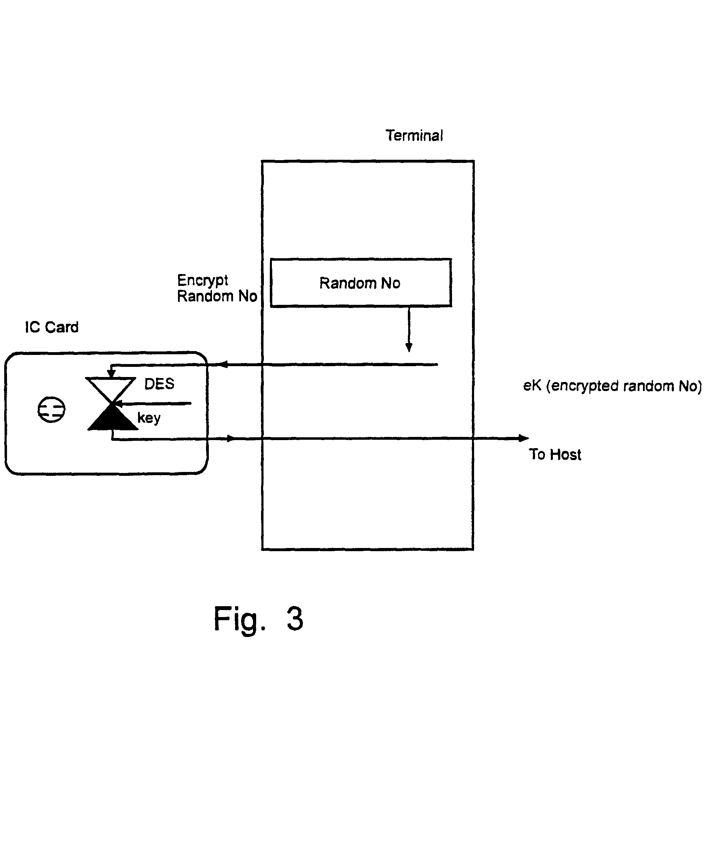

In step 100, the IC card 1 is inserted in the terminal 2, whereby contact is established between said terminal communication means 5 and said card communication means 4. In step 101, an ID code stored in said memory means 16 is transferred via terminal 2 from the user unit IC card to the host 3. In step 102, on the basis of verification of the card type, i.e. the card configuration, the host 3 informs the terminal 2 on how its read-out means 11 are to proceed to read out the card-specific program information from said first card memory means 9. In accordance with a preferred embodiment, data transferred from the host contains information on the address where the read-out is to begin. In step 103, the card-specific program information is read from card 1 to terminal 2. In step 104, a random number is generated in said key generating means 13, said random number to be used as a session key in a sealing process while using a Message Authentication Algorithm (MAA). In step 105, the session key in the IC card is encrypted in said encryption means 15 using the secret information contained in the second card memory 10 of the IC card 1. In step 106, the session key is transferred in encrypted state to the host 3. Steps 104, 105 and 106 are illustrated in closer detail in Fig. 3. In step 107, a keyboard associated with the terminal 2 is opened for use. In step 108, data transfer is begun in the now adopted safe system mode.

In the following, the description will be made with reference to Fig. 3. In accordance with the preferred embodiment a random number is generated in the terminal to be used as a key in an MAA process to authenticate messages (i.e. data) transferred from the user unit to the host and vice versa. This random number is then encrypted in the card in a DES encryption algorithm, using the secret information (DES key) in said second card memory means 10 (Fig. 1) as the encryption key in order to be transferred in encrypted state (the encrypted random number is designated by eK) via the terminal to the host 3, wherein it is decrypted and used as a session key in an MAA.

In Fig. 4 is exemplified the manner in which data transfers and authentication of data are carried out in a safe system mode in accordance with the preferred embodiment. The encrypted random number eK, having been transferred from the user unit, is decrypted in the host by means of a key stored in the host, said key depending on the card that is being used and being identical with the one in said card. The decrypted random number is then used as an MAA key together with a message to be transferred to the user unit and a message serial number, in an MAA in order to generate a cryptographic check sum, Message Authentication Code (MAC), which is added to and used to authenticate the message. The MAC will have a different appearance in successive messages during one and the same session (also when their contents are the same, since they have received different serial numbers). Thus, a flow of data is transferred, containing the message, the serial number, in cleartext, and a MAC.

In the user unit an MAA check is carried out to verify the message received while using the MAA key in the terminal, i.e. the random number, or in other words, a check to verify whether the message has been manipulated on its way from the host to the user unit. The check comprises a corresponding computation of a MAC and a comparison thereof with the MAC received together with the message, to determine coincidence.

When the user unit is to transfer a response message to the host one proceeds in a corresponding manner, i.e. on the basis of the random number, the response, and the serial number transferred from the host a new MAC is computed, which is added to the flow of data formed by the response from the user unit to the host and the latest serial number transferred from the host. The host then performs an MAA check of the transfered response in order to check that the response has not been manipulated on its way between the user unit and the host. Further message transfers may then be carried out in the same way.

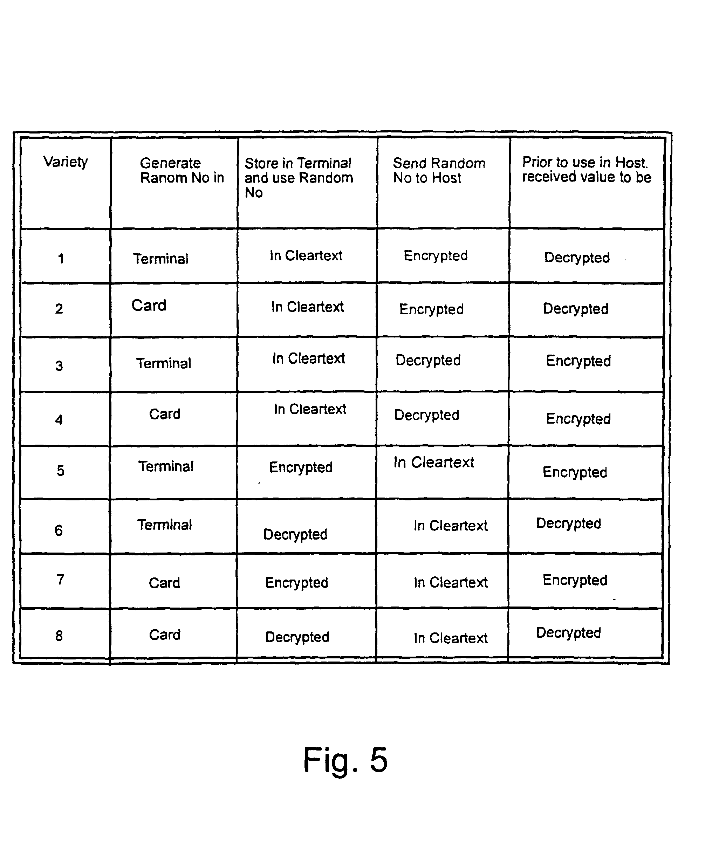

Fig. 5 is an account of a number of possible modifications 1-8 of random number generation and protection of random numbers that may be used in connection with the present invention. Four cases (1,3,5,6) are shown in which the random number used as a session key is generated in the terminal and four cases (2,4,7,8) wherein the random number is generated in the card. In addition, four different varieties are shown of the forms in which the corresponding session key is used for cryptographic protection respectively is transferred to the host.

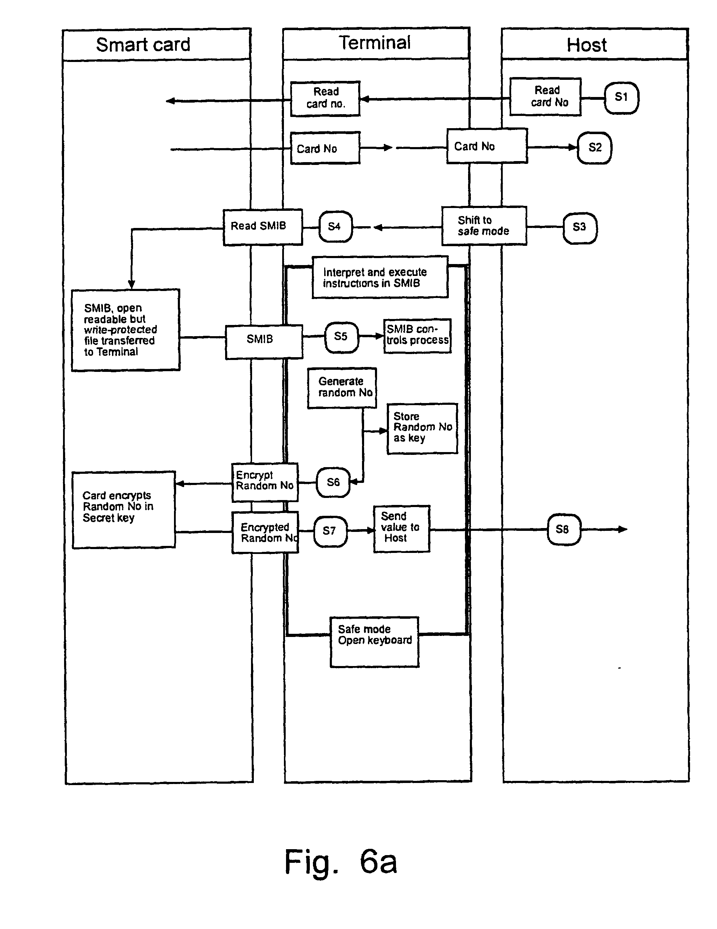

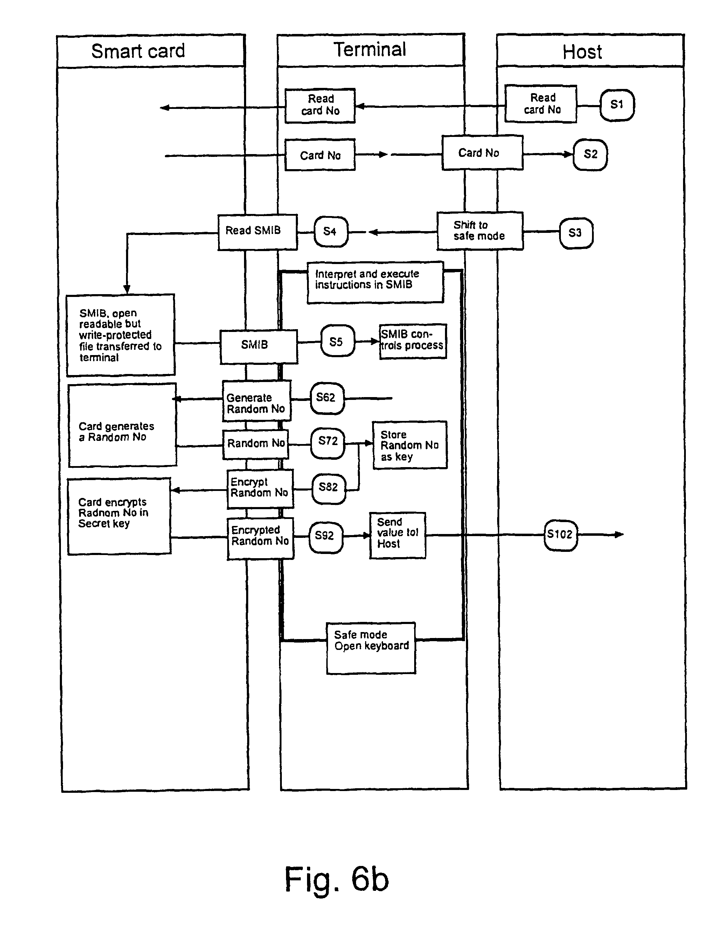

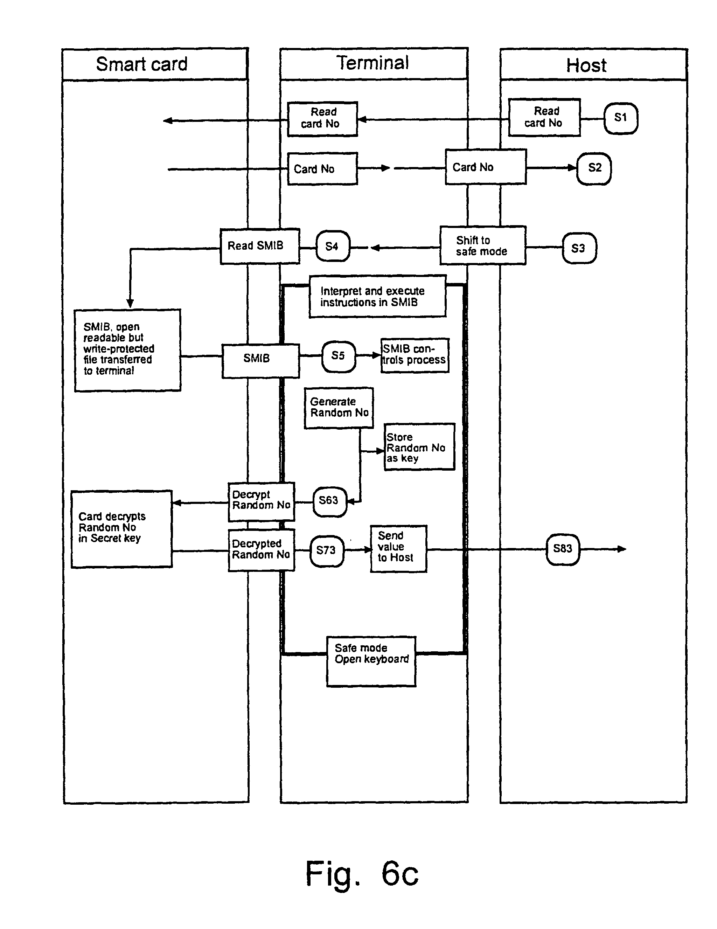

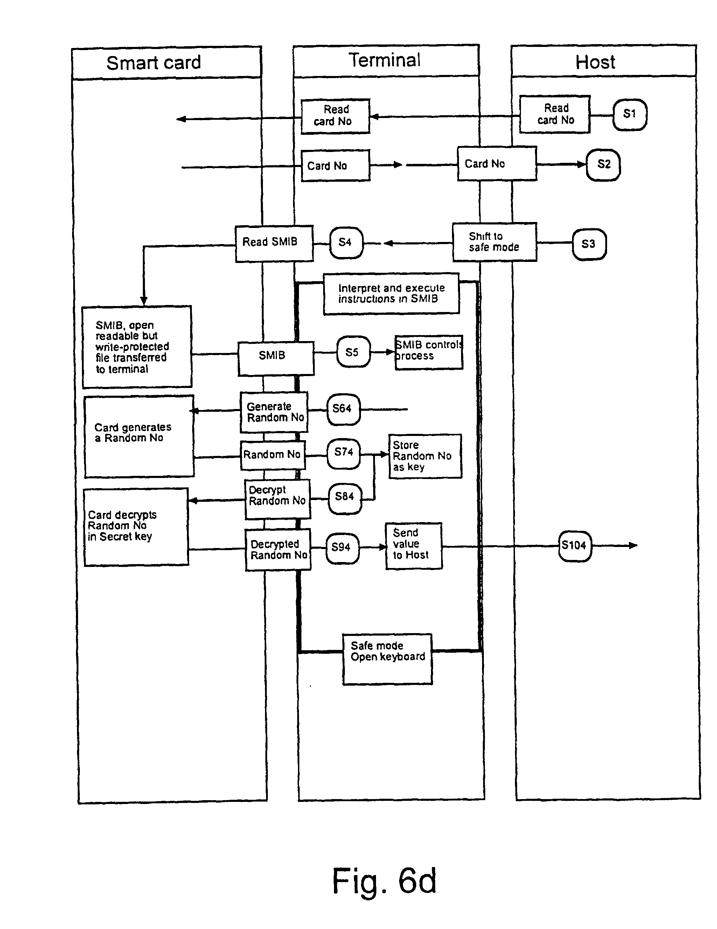

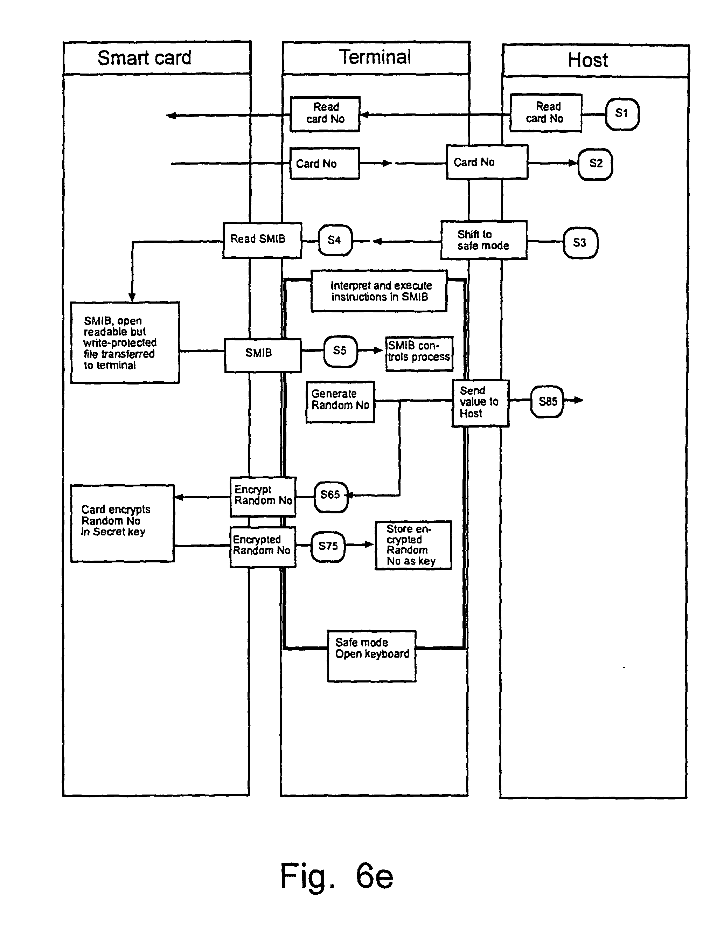

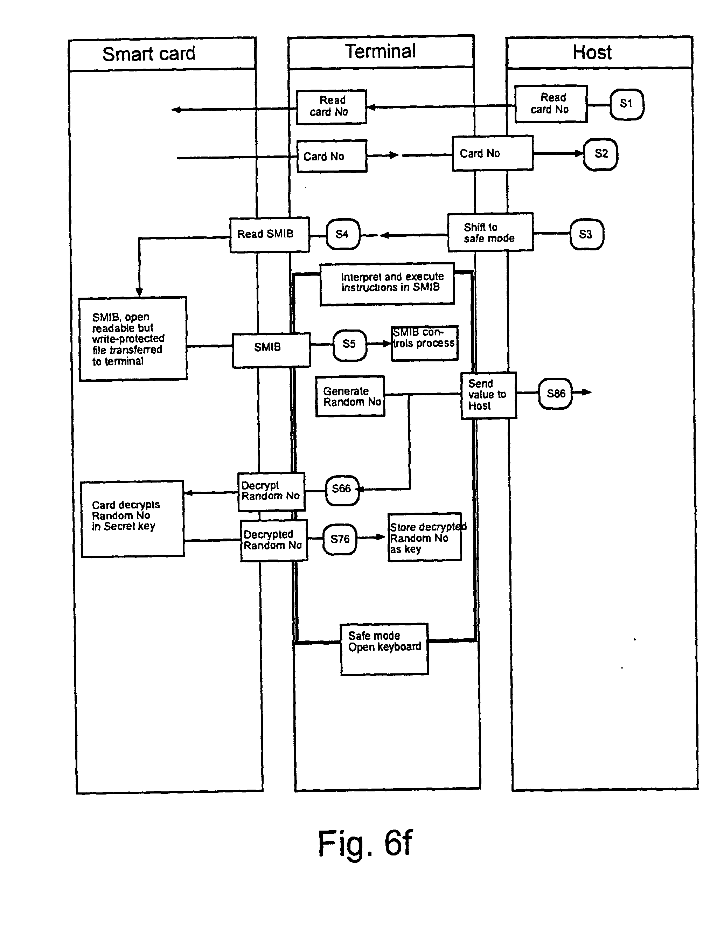

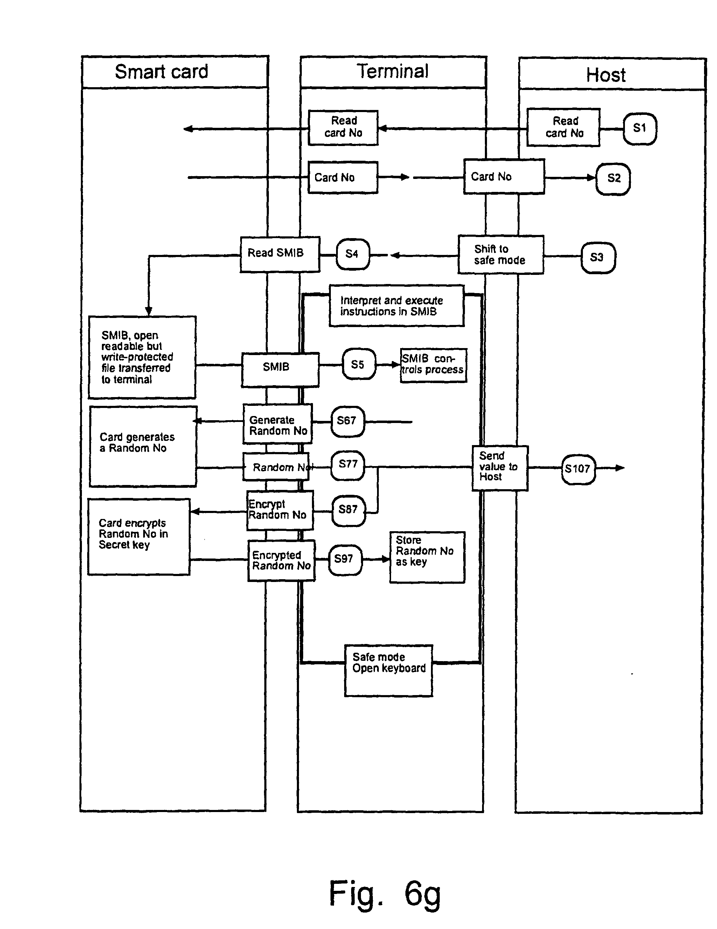

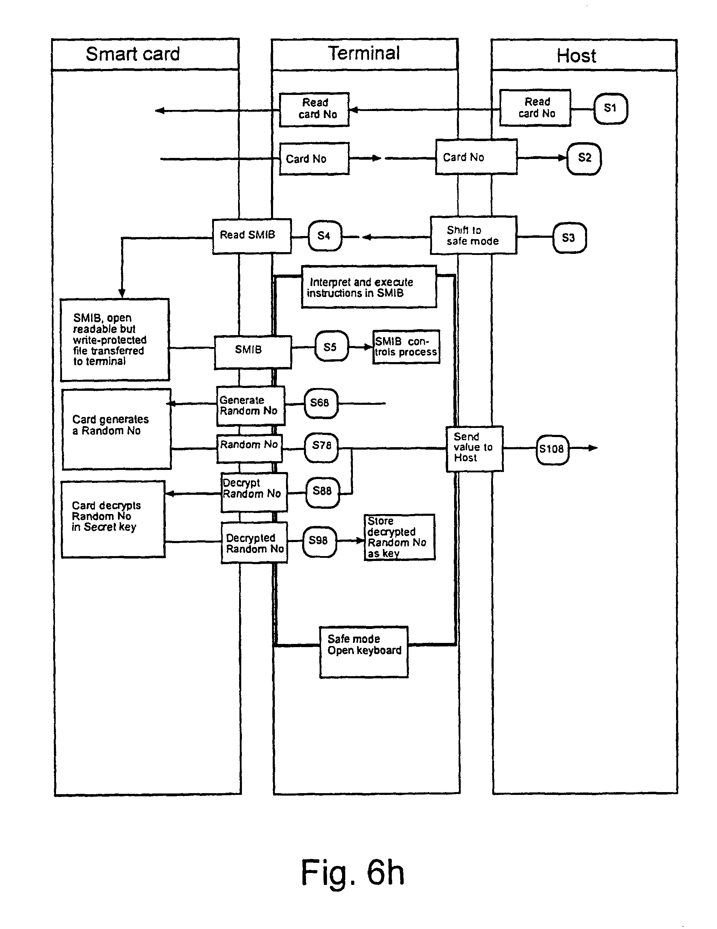

Figs 6a-6h show the eight various cases accounted for in Fig. 5 in more detail. The various steps illustrated for each case are indicated by numeral references placed inside white rectangular boxes. Each Figure illustrates the situation occurring when a user has inserted his card in the terminal and the system is about to accomplish a safe mode. It appears from the Figures that steps S1-S5 are identical for all eight varieties. In step S1, the central unit (Host) commands the terminal (Terminal) to read out the identification number of the card to verify whether the card is associated with the host in question and, when the verification is positive, to supply the encryption key which is associated with the card and which is to be used in the host to encrypt or decrypt the random number (session key), depending on which form the key has been transferred to the host. In step S2, the terminal transfers the read-out card number to the host. In all eight cases, the host makes sure that the card has been issued by the user of the host, whereupon in step S3 it orders the terminal to begin to assume a safe mode. In steps S4 and S5 the terminal executes the program sequence that is its resident program information, i.e. to read and fetch the card-specific program information from a file (SMIB) in the card. The rest of the steps to be executed in order for a safe mode to be assumed is governed by the contents of SMIB, i.e. the card-specific program information. This shows that a comparatively simple and thus inexpensive terminal (in principle capable only of reading out a file from an IC card), when used in a system in accordance with the present invention, may achieve an astonishing degree of flexibility with respect to its ability to interact with cards that are configured in different ways. The first case illustrated is the one shown in Fig. 3, i.e. the random number to be used as a session key is generated in the terminal and is encrypted in the card, in step S6 before being transferred to and stored in the terminal in step S7, the terminal finally, in step S8, sending the encrypted random number to the host, whereupon data transfer in safe system mode may be started in accordance with Fig. 4.

In accordance with the second case illustrated the following steps are performed, in addition to steps S1-S5 already described, viz.: in step S62 the terminal orders (in accordance with the contents of-the corresponding SMIB) the card to generate a random number; the card generates and sends a random number to the terminal wherein it is stored, in step S72; in step S82 the terminal orders the card to encrypt the generated random number; the card encrypts the random number and transmits it in encrypted state to the terminal; in step S102, finally, the terminal transmits the encrypted random number to the host, whereupon data transfer in safe system mode may start in accordance with Fig. 4.

In the third case illustrated, the following steps are executed in addition to steps S1-S5 already described, viz.: in step S63 the terminal generates and stores a random number and orders the card to decrypt the random number: in step S73 the decrypted random number is transferred to the terminal; and in step S83 the decrypted random number is transferred to the host. When the random number (session key) reaches the host it should not be decrypted before use but be encrypted in order to provide the key in cleartext, and otherwise data transfers are commenced in a safe system mode in same manner as illustrated in Fig. 4.

In the fourth case illustrated the following steps are executed, in addition to steps S1-S5 already described, viz.: in step S64 the card is ordered to generate a random number; in step 74 this random number is transferred to and stored in the terminal; in step S84 the terminal orders the card to decrypt the random number; in step S94 the card sends the decrypted random number to the terminal; and in step S104 the decrypted random number is sent to Host. When the random number (session key) reaches the host it should not be decrypted before use but be encrypted to provide the key in cleartext and otherwise the data transfer in a safe system mode commences in the same manner as illustrated in Fig. 4.

In the fifth case illustrated the following steps are executed; in addition to steps S1-S5 already described, viz.: the terminal generates a random number which is transmitted in step S85 to the host in cleartext and which in step S65 is encrypted by the card; in step S75 the encrypted random number is transferred to and stored in the terminal. Because there is an encrypted session key in the terminal and because the session key has been transferred to Host in cleartext it is necessary, in order to establish data transfer in safe system mode, to encrypt the session key in Host before it can be used.

The sixth case illustrated is distinguished from the fifth case only in the respect that whenever encrypting is effected in the fifth case decrypting now is to be performed.

In the seventh case illustrated the following steps are executed, in addition to steps S1-S5 already described, viz.: in step S67 the terminal orders the card to generate a random number which in step S77 is transferred to the terminal; in step S107 this random number is transferred in cleartext to the terminal and in step S87 the card encrypts the random number; in step 597, finally, the encrypted random number is transferred to and stored in the terminal. Because there is an encrypted session key in the terminal and because the session key has been transferred to Host in clear text it is necessary, in order to establish data transfer in safe system mode, to encrypt the session key in Host before it may be used.

The eighth case illustrated is distinguished from the seventh one only in the respect that whenever encrypting is effected in the seventh case decrypting now is to be performed.

One example of a set of the card-specific program information being transferred from the card to the terminal and producing the generation of a session key and transfer thereof to the host in accordance with variety 1 in Fig. 5 (Fig. 6a) may contain the following sequence of commands; OPEN (open up the file in the card containing the card-specific secret information, allowing it to be used as an encryption key in an encryption algorithm), RANDOM (generate a random number in the key-generating means 13 of the terminal in accordance with the instructions contained in the command and storage of said number in the terminal storing means 14), CRYPT (read over the random number to the card and encrypt the random number in the card using a conventional encryption algorithm defined in and executed by the processor 15, and the encryption key), READ (read out the encrypted random number to the terminal) and TRANS (transfer the encrypted random number to host).

It should be understood that the commands and functions defined are only of an exemplifying nature and that they may be implemented in a large number of different ways and in a large number of different program languages. The methods of implementation of the functions used in the embodiments in accordance with the present invention in program code must be considered self-evident to those skilled in the art when reading the present application and therefore they will not be described in more detail herein.

## Claims

1. A method of transferring data between a user unit (1,2) comprising a terminal (2) and an IC card (1) which is placed in communication with the terminal (2), and a central unit (3), such as a central computer located at a producer of services, preferably a bank, **characterised in that** the user unit (1,2) is made to change from operating in a normal mode to operate in a safe system mode, said safe system mode involving safe data transfer between the user unit (1,2) and the central unit (3) in the sense that unauthorised persons cannot gain knowledge of the transferred data and to verify whether transferred data have been distorted or been replaced during the transfer, the method comprising the steps of:
- during said normal mode, establishing communication (100) between the card (1) and the terminal (2),
- during said normal mode, transferring (101) a card-identifying code from the user unit (1,2) to the central unit (3), on the basis of which code said central unit (3) instructs (102) the user unit (1,2) on the manner to be adopted for the transfer of the card specific program information from the card (1) to the terminal (2),
- during said normal mode, transferring (103) the card specific program information to the terminal (2) to be utilised during operation in said safe system mode, and:
- initiating (108) said safe system mode, during which safe data transfers are effected while making use of card-specific secret information in the IC card (1), the use of the card-specific secret information for cryptographic protection being effected in such a manner that the card-specific secret information never leaves the card (1) .

2. A method as claimed in claim 1, wherein a session key is created (104) in the user unit (1,2) for use in the transfer of data in a safe system mode, said session key being encrypted or decrypted (105) in the IC card (1), and wherein said session key is transferred (106) to the central unit (3) in an encrypted or decrypted form.

3. A method as claimed in claim 1, wherein a session key is created in the user unit (1,2), said session key being transferred to the central processing unit (3) in clear text, whereupon said session key is encrypted or decrypted in the central processing unit (3) and the IC card (1), to be used in an encrypted or decrypted form in the transfer of data in a safe system mode.

4. A method as claimed in claim 2 or 3, wherein the session key is a random number which preferably is generated in the terminal (2).

5. A method as claimed in any one of claims 2-4, wherein the session key in the user unit (1,2) is erased as soon as connection between the card (1) and the terminal (2) is interrupted.

6. A method as claimed in any one of claims 2-4, wherein the session key in the user unit (1,2) is erased as soon as a new connection is established between the terminal (2) and an IC card (1).

7. A method as claimed in any one of the preceding claims, wherein input of information via a keyboard associated with the terminal (2) may be effected only in a safe system-operational mode.

8. A system for transfer of data, comprising a user unit (1,2) having an IC card (1) and a terminal (2), and a central unit (3), said card (1) comprising card communication means (4) for communication with the terminal (2), the terminal (2) comprising terminal communication means (5) for communication with the card (1), and a terminal communication unit (6) for communication with the central unit (3), said central unit (3) comprising a central communication unit (7) for communication with the terminal (2), and the user unit (1,2) and the central processing unit (3) comprising secret information that is used to cryptographically protect data transfers between said units, characterised in that:
- the IC card (1) comprises first card memory means (9) for storage of card specific program information,
- the IC card (1) comprises second card memory means (10) for storage of card-specific secret information which is used to cryptographically protect data transferred between the user unit and the central unit (3) in a safe system mode, said second card memory means (10) being configured in such a manner that said secret information cannot be read out from the card (1),
- the IC card (1) comprises memory means (16) for storage of card-identifying information or a card-identifying code arranged to be transferred to the central unit (3), said central unit being arranged, while being guided by said code or information, to instruct the user unit (1,2) of the manner in which the contents of said first card memory means (9) are to be read out,
- the terminal (2) comprises terminal read-out means (11) for reading the contents of said first card memory means (9), and
- the terminal (2) comprises program executing means (12) arranged, while utilising the read-out card-specific program information, to control the interaction between the terminal (2) and the IC card (1) in order to change from operating in a normal mode to operate in the safe system mode.

9. A system as claimed in claim 8, wherein the user unit comprising key generating means (13) arranged to generate a session key, and storage means (14) for storing such a session key, and wherein the IC card (1) comprises processing means (15) arranged to cryptographically protect the session key which said terminal communication unit (6) is arranged to transfer to the central unit.

10. A system as claimed in claim 9, wherein said key generating means (13) being a random number generator or a pseudo random number generator.

11. A system as claimed in claim 9 or 10, wherein said key generating means (13) are arranged in the terminal (2).

12. A system as claimed in claim 9 or 10, wherein said key generating means forms an integrated part of said processing means (15).

13. A system as claimed in any one of claims 9-12, wherein the user unit is arranged to erase the session key in the user unit as soon as connection between said card communication means (4) and said terminal communication means (5) is interrupted.

14. A system as claimed in any one of claims 9-12, wherein said user unit is arranged to erase the session key in the user unit as soon as new connection is established between said card communication means (4) and said terminal communication means (5).

15. A system as claimed in any one of claims 8-14, wherein the user unit comprises a keyboard for input of data into the system, said keyboard being arranged to be operative only when the system is in a safe system mode.

## Patentansprüche

1. Verfahren zum Übertragen von Daten zwischen einer Benutzereinheit (1, 2), die ein Endgerät (2) und eine IC-Karte (1), die in Kommunikation mit dem Endgerät (2) ist, und eine zentrale Einheit (3), wie beispielsweise einen zentralen Computer, umfasst, der sich bei einem Dienstleister, vorzugsweise einer Bank, befindet, **dadurch gekennzeichnet, dass** die Benutzereinheit (1, 2) veranlasst wird, von Betrieb in einem normalen Modus zu Betrieb in einem sicheren Systemmodus zu wechseln, wobei der sichere Systemmodus sichere Datenübertragung zwischen der Benutzereinheit (1, 2) und der zentralen Einheit (3) in dem Sinne einschließt, dass unberechtigte Personen keine Kenntnis über die übertragenen Daten erhalten können, und zu prüfen, ob übertragene Daten während der Übertragung verfälscht oder ausgetauscht worden sind, wobei das Verfahren die folgenden Schritte umfasst:
Herstellen von Kommunikation (100) zwischen der Karte (1) und der Endstelle (2) während des normalen Modus,
Übertragen (101) eines Kartenidentifizierungscodes von der Benutzereinheit (1, 2) zu der zentralen Einheit (3), wobei die zentrale Einheit (3) auf Basis dieses Codes die Benutzereinheit (1, 2) bezüglich der Art und Weise instruiert (102), die für die Übertragung der kartenspezifischen Programminformationen von der Karte (1) zu dem Endgerät (2) einzusetzen ist, während des normalen Modus,
Übertragen (103) der kartenspezifischen Programminformationen zu dem Endgerät (2) zur Nutzung während des Betriebs in dem sicheren Systemmodus, während des normalen Modus; und
Einleiten (108) des sicheren Systemmodus, während dessen sichere Datenübertragungen durchgeführt werden, wobei kartenspezifische Geheiminformationen in der IC-Karte (1) verwendet werden und die Verwendung der kartenspezifischen Geheiminformationen für den kryptografischen Schutz so durchgeführt wird, dass die kartenspezifischen Geheiminformationen die Karte (1) nie verlassen.

2. Verfahren nach Anspruch 1, wobei ein Sitzungsschlüssel in der Benutzereinheit (1, 2) zur Verwendung bei der Übertragung von Daten in einem sicheren Systemmodus erzeugt (104) wird und der Sitzungsschlüssel in der IC-Karte (1) verschlüsselt oder entschlüsselt wird (105) und wobei der Sitzungsschlüssel in verschlüsselter oder entschlüsselter Form zu der zentralen Einheit (3) übertragen wird (106).

3. Verfahren nach Anspruch 1, wobei ein Sitzungsschlüssel in der Benutzereinheit (1, 2) erzeugt wird und der Sitzungsschlüssel in Klartext zu der zentralen Verarbeitungseinheit (3) übertragen wird und daraufhin der Sitzungsschlüssel in der zentralen Verarbeitungseinheit (3) und der IC-Karte (1) verschlüsselt oder entschfüsselt wird, um ihn in einer verschlüsselten oder entschlüsselten Form bei der Übertragung von Daten in einem sicheren Systemmodus zu verwenden.

4. Verfahren nach Anspruch 2 oder 3, wobei der Sitzungsschlüssel eine Zufallszahl ist, die vorzugsweise in dem Endgerät (2) erzeugt wird.

5. Verfahren nach einem der Ansprüche 2-4, wobei der Sitzungsschlüssel in der Benutzereinheit (1, 2) gelöscht wird, sobald die Verbindung zwischen der Karte (1) und dem Endgerät (2) unterbrochen wird.

6. Verfahren nach einem der Ansprüche 2-4, wobei der Sitzungsschlüssel in der Benutzereinheit (1, 2) gelöscht wird, sobald eine neue Verbindung zwischen dem Endgerät (2) und einer IC-Karte (1) hergestellt wird.

7. Verfahren nach einem der vorangehenden Ansprüche, wobei die Eingabe von Informationen über eine mit dem Endgerät (2) verbundene Tastatur nur in einem sicheren System-Betriebsmodus ausgeführt werden kann.

8. System zum Übertragen von Daten, das eine Benutzereinheit (1, 2) mit einer IC-Karte (1) und einem Endgerät (2) sowie eine zentrale Einheit (3) umfasst, wobei die Karte (1) eine Kartan-Kommunikationseinrichtung (4) zur Kommunikation mit dem Endgerät (2) umfasst, das Endgerät (2) eine Endgerät-Kommunikationseinrichtung (5) zur Kommunikation mit der Karte (1) und eine Endgerät-Kommunikationseinheit (6) zur Kommunikation mit der zentralen Einheit (3) umfasst, und wobei die zentrale Einheit (3) eine zentrale Kommunikationseinheit (7) zur Kommunikation mit dem Endgerät (2) umfasst und die Benutzereinheit (1, 2) sowie die zentrale Verarbeitungseinheit (3) Geheiminformationen umfassen, die verwendet werden, um Datenübertragungen zwischen den Einheiten kryptografisch zu schützen, **dadurch gekennzeichnet, dass**:
die IC-Karte (1) eine erste Karten-Speichereinrichtung (9) zum Speichern von kartenspezifischen Programminformationen umfasst,
die IC-Karte (1) eine zweite Karten-Speichereinrichtung (10) zum Speichern von kartenspezifischen Geheiminformationen umfasst, die verwendet werden, um zwischen der Benutzereinheit und der zentralen Einheit (3) in einem sicheren Systemmodus übertragene Daten kryptografisch zu schützen, wobei die zweite Karten-Speichereinrichtung (10) so ausgeführt ist, dass die Geheiminformationen nicht aus der Karte (1) ausgelesen werden können,
die IC-Karte (1) eine Speichereinrichtung (16) zum Speichern von Karten-Identifizierungsinformationen oder eines Karten-Identifizierungscodes umfasst, die/der zu der zentralen Einheit (3) übertragen wird, wobei die zentrale Einheit so eingerichtet ist, dass sie von dem Code bzw. den Informationen geleitet die Benutzereinheit (1, 2) bezüglich der Art und Weise instruiert, auf die der Inhalt der ersten Kartenspeichereinrichtung (9) auszulesen ist,
das Endgerät (2) eine Endgerät-Ausleseeinrichtung (11) zum Lesen des Inhalts der ersten Karten-Speichereinrichtung (9) umfasst, und
das Endgerät (2) eine Programmausführungseinrichtung (12) umfasst, die so eingerichtet ist, dass sie, während sie die ausgelesenen kartenspezifischen Programminformationen nutzt, die Interaktion zwischen dem Endgerät (2) und der IC-Karte (1) steuert, um von Betrieb in einem normalen Modus zu Betrieb in dem sicheren Systemmodus zu wechseln.

9. System nach Anspruch 8, wobei die Benutzereinheit eine Schlüssel-Erzeugungseinrichtung (13), die so eingerichtet ist, dass sie einen Sitzungsschlüssel erzeugt, und eine Speichereinrichtung (14) zum Speichern dieses Sitzungsschlüssels umfasst, und wobei die IC-Karte (1) eine Verarbeitungseinrichtung (15) umfasst, die so eingerichtet ist, dass sie den Sitzungsschlüssel kryptografisch schützt, den die Endgerät-Kommunikationseinheit (6) zu der zentralen Einheit überträgt.

10. System nach Anspruch 9, wobei die Schlüssel-Erzeugungseinrichtung (13) ein Zufallszahl-Generator oder ein Pseudozufallszahl-Generator ist.

11. System nach Anspruch 9 oder 10, wobei die Schlüssel-Erzeugungseinrichtung (13) in dem Endgerät (2) angeordnet ist.

12. System nach Anspruch 9 oder 10, wobei die Schlüssel-Erzeugungseinrichtung einen integrierten Teil der Verarbeitungseinrichtung (15) bildet.

13. System nach einem der Ansprüche 9-12, wobei die Benutzereinheit so eingerichtet ist, dass sie den Sitzungsschlüssel in der Benutzereinheit löscht, sobald die Verbindung zwischen der Karten-Kommunikationseinrichtung (4) und der Endgerät-Kommunikationseinrichtung (5) unterbrochen wird.

14. System nach einem der Ansprüche 9-12, wobei die Benutzereinheit so eingerichtet ist, dass sie den Sitzungsschlüssel in der Benutzereinheit löscht, sobald eine neue Verbindung zwischen der Karten-Kommunikationseinrichtung (4) und der Endgerät-Kommunikationseinrichtung (5) hergestellt wird.

15. System nach einem der Ansprüche 8-14, wobei die Benutzereinheit eine Tastatur zum Eingeben von Daten in das System umfasst und die Tastatur so eingerichtet ist, dass sie nur dann betriebsfähig ist, wenn sich das System in einem sicheren Systemmodus befindet.

## Revendications

1. Procédé permettant de transférer des données entre une unité d'utilisateur (1, 2) comprenant un terminal (2) et une carte à circuit intégré (1) qui est placée en communication avec le terminal (2), et une unité centrale (3), par exemple un ordinateur central placé chez un fournisseur de services, de préférence une banque, **caractérisé en ce que** l'unité d'utilisateur (1, 2) est conçue pour passer d'un fonctionnement suivant un mode normal à un fonctionnement suivant un mode de système protégé, ledit mode de système protégé impliquant un transfert de données protégé entre l'unité d'utilisateur (1, 2) et l'unité centrale (3) au sens où des personnes non autorisées ne peuvent pas avoir connaissance des données transférées, et pour vérifier si les données transférées ont été altérées ou ont été remplacées pendant le transfert, le procédé comprenant les opérations suivantes :
- pendant ledit mode normal, établir une communication (100) entre la carte (1) et le terminal (2),
- pendant ledit mode normal, transférer, de l'unité d'utilisateur (1, 2) à l'unité centrale (3), un code d'identification de carte, sur la base duquel code ladite unité centrale (3) donne à l'unité d'utilisateur (1, 2) des instructions (102) sur la manière à adopter pour le transfert, de la carte (1) au terminal (2), des informations de programmes spécifiques de la carte,
- pendant ledit mode normal, transférer (103) au terminal (2) les informations de programmes spécifiques de la carte à utiliser pendant le fonctionnement dans ledit mode de système protégé, et
- lancer (108) ledit mode de système protégé, pendant lequel les transferts de données protégés sont effectués alors qu'il est fait usage d'informations secrètes spécifiques de la carte dans la carte à circuit intégré (1), l'utilisation des informations secrètes spécifiques de la carte pour la protection cryptographique étant effectuée de manière que ces informations secrètes spécifiques de la carte ne quittent jamais la carte (1).

2. Procédé selon la revendication 1, où une clé de session est créée (104) dans l'unité d'utilisateur (1, 2) pour être utilisée lors du transfert de données dans le mode de système protégé, ladite clé de session étant cryptée ou décryptée (105) dans la carte à circuit intégré (1), et où ladite clé de session est transférée (106) à l'unité centrale (3) sous une forme cryptée ou décryptée.

3. Procédé selon la revendication 1, où une clé de session est créée dans l'unité d'utilisateur (1, 2), ladite clé de session étant transférée à l'unité centrale de traitement (3) dans un texte clair, après quoi ladite clé de session est cryptée ou décryptée dans l'unité centrale de traitement (3) et la carte à circuit intégré (1), pour être utilisée sous une forme cryptée ou décryptée lors du transfert de données dans le mode de système protégé.

4. Procédé selon la revendication 2 ou 3, où la clé de session est un nombre aléatoire qui est de préférence produit dans le terminal (2).

5. Procédé selon l'une quelconque des revendications 2 à 4, où la clé de session de l'unité d'utilisateur (1, 2) est effacée aussitôt que la connexion entre la carte (1) et le terminal (2) est interrompue.

6. Procédé selon l'une quelconque des revendications 2 à 4, où la clé de session de l'unité d'utilisateur (1, 2) est effacée aussitôt qu'une nouvelle connexion est établie entre le terminal (2) et une carte à circuit intégré (1).

7. Procédé selon l'une quelconque des revendications précédentes, où l'introduction d'informations via un clavier associé au terminal (2) ne peut être effectuée que dans un mode de fonctionnement du système protégé.

8. Système de transfert de données, comprenant une unité d'utilisateur (1, 2) possédant une carte à circuit imprimé (1) et un terminal (2) et une unité centrale (3), ladite carte (1) comprenant un moyen (4) de communication de carte permettant de communiquer avec le terminal (2), le terminal (2) comprenant un moyen (5) de communication de terminal permettant de communiquer avec la carte (1), et une unité (6) de communication de terminal permettant de communiquer avec l'unité centrale (3), ladite unité centrale (3) comprenant une unité (7) de communication centrale permettant de communiquer avec le terminal (2), l'unité d'utilisateur (1, 2) et l'unité centrale de traitement (3) comprenant des informations secrètes qui sont utilisées pour protéger du point de vue cryptographique les transferts de données entre lesdites unités, **caractérisé en ce que** :
- la carte à circuit intégré (1) comprend un premier moyen (9) de mémorisation de carte servant à stocker des informations de programmes spécifiques de la carte,
- la carte à circuit intégré (1) comprend un deuxième moyen (10) de mémorisation de carte servant à stocker des informations secrètes spécifiques de la carte qui sont utilisées pour protéger du point de vue cryptographique les données transférées entre l'unité d'utilisateur et l'unité centrale (3) dans un mode de système protégé, ledit deuxième moyen (10) de mémorisation de carte étant configuré de manière que lesdites informations secrètes ne puissent pas être lues extérieurement à la carte (1),
- la carte à circuit intégré (1) comprend un moyen (16) de mémorisation servant à stocker des informations d'identification de carte ou un code d'identification de carte destinés à être transférés à l'unité centrale (3), ladite unité centrale étant conçue, tandis qu'elle est guidée par ledit code ou lesdites informations, pour donner à l'unité d'utilisateur (1, 2) les instructions sur la manière selon laquelle le contenu du premier moyen (9) de mémorisation de carte doit être lu,
- le terminal (2) comprend un moyen (11) de lecture de terminal servant à lire le contenu dudit premier moyen de mémorisation (9) de carte, et
- le terminal (2) comprend un moyen (12) d'exécution de programme qui est conçu pour que, pendant l'utilisation des informations de programmes spécifiques de la carte lues, on commande l'interaction entre le terminal (2) et la carte à circuit intégré (1) afin de faire passer du fonctionnement suivant un mode normal à un fonctionnement suivant le mode de système protégé.

9. Système selon la revendication 8, où l'unité d'utilisateur comprend un moyen (13) de production de clé destiné à produire une clé de session, et un moyen de stockage (14) servant à stocker cette clé de session, et où la carte à circuit intégré (1) comprend un moyen de traitement (15) conçu pour protéger du point de vue cryptographique la clé de session que ladite unité (6) de communication de terminal est destinée pour transférer à l'unité centrale.

10. Système selon la revendication 9, où ledit moyen de production de clé (13) est un générateur de nombres aléatoires ou un générateur de nombres pseudoaléatoires.

11. Système selon la revendication 9 ou 10, où ledit moyen (13) de production de clé est disposé dans le terminal (2).

12. Système selon la revendication 9 ou 10, où ledit moyen de production de clé fait intégralement partie dudit moyen de traitement (15).

13. Système selon l'une quelconque des revendications 9 à 12, où l'unité d'utilisateur est conçue pour effacer la clé de session se trouvant dans l'unité d'utilisateur aussitôt que la connexion entre ledit moyen (4) de communication de carte et ledit moyen (5) de communication de terminal est interrompue.

14. Système selon l'une quelconque des revendications 9 à 12, où ladite unité d'utilisateur est conçue pour effacer la clé de session se trouvant dans l'unité d'utilisateur aussitôt qu'une nouvelle connexion est établie entre le moyen (14) de communication de carte (4) et le moyen de communication de terminal (5).

15. Système selon l'une quelconque des revendications 8 à 14, où l'unité d'utilisateur comprend un clavier destiné à introduire les données dans le système, ledit clavier étant conçu pour ne pouvoir fonctionner que lorsque le système est dans le mode de système protégé.
